# EUROPÄISCHE PATENTSCHRIFT

(11) **EP 2 416 937 B1**
(45) Veröffentlichungstag und Bekanntmachung des Hinweises auf die Patenterteilung: **14.08.2013**
(21) Anmeldenummer: 10711182.5
(22) Anmeldetag: 12.03.2010
(51) Int. Cl.: B29C 55/10, B29C 55/20

(54) **VORRICHTUNG ZUM MONO- ODER BIAXIALEN RECKEN VON FOLIENABSCHNITTEN**
DEVICE FOR STRETCHING FILM SECTIONS IN A MONOAXIAL OR BIAXIAL MANNER
DISPOSITIF D'ÉTIRAGE MONOAXIAL OU BIAXIAL DE SECTIONS DE FEUILLES

(30) Priorität: 06.04.2009 DE 102009003751
(43) Veröffentlichungstag der Anmeldung: 15.02.2012
(73) Patentinhaber: Dr. Collin GmbH, 85560 Ebersberg (DE)
(72) Erfinder: COLLIN, Heinrich, 85591 Vaterstetten (DE)
(74) Vertreter: Wittmann, Ernst-Ulrich
(86) Internationale Anmeldenummer: PCT/EP2010/053205
(87) Internationale Veröffentlichungsnummer: WO 2010/115677

(56) Entgegenhaltungen:
- DE-A1- 1 778 619
- US-A- 3 315 301
- US-A- 5 552 006

## Beschreibung

Die Erfindung betrifft eine Vorrichtung gemäß Anspruch 1 zum mono- oder biaxialen Recken von Folienabschnitten, welche vorzugsweise im wesentlichen aus Polymeren bestehen, wobei ein quadratischer oder rechteckiger Ausschnitt einer solchen Folie an vier Seiten durch jeweils mindestens zwei Kluppen gefasst wird, wobei ein fester unterer Kluppenteil die Auflage bildet und ein von oben, senkrecht zur Folienebene, herabgeführter oberer Kluppenteil die Folie am umlaufenden Rand einspannt.

Das Herabführen des oberen Kluppenteils und der Aufbau der Spannkraft wird durch z. B. pneumatische oder hydraulische Zylinder bewirkt.

Nach einem Aufheizen der eingespannten Folie durch z. B. Heißluft oder IR-Strahlen fahren vier Gruppen von Kluppen nach allen vier Seiten auseinander, um einen Reckvorgang durchzuführen.

Die Kluppen sind jeweils in Führungsschienen geführt, welche z. B. durch Getriebemotore oder Hydraulikzylinder bewegt werden.

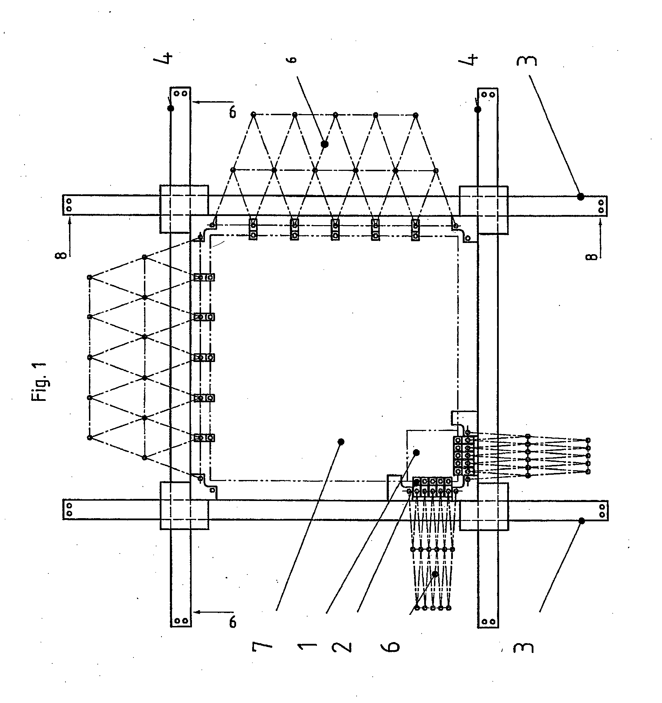

Die Kluppen werden durch ein Pantograph-System (ein System aus kreuzweise angeordneten parallel laufenden Leisten welche gelenkig miteinander verbunden sind) in ihrer Bewegung synchronisiert, um einen gleichmäßigen Reckvorgang an allen Seiten zu gewährleisten *(Prinzipdarstellung* *Fig. 1**).*

Bekannte Vorrichtungen dieser Art, die im Allgemeinen auch als Reckrahmen bezeichnet werden, verwenden z. B. zum Einspannen eines quadratischen Folienmusters in Größen von 100 x 100 mm an jeder der vier Seiten je fünf Kluppen mit den Breiten von 10 bis 12 mm *(siehe* *Fig. 1**).*

Eine eher geringe Breite der Kluppen, dafür eine größere Zahl der Kluppen, ist erforderlich, um ein gleichmäßiges Verstrecken der Folie zu garantieren.

Die begrenzte Breite der Kluppen begrenzt auch die Größe des eingearbeiteten pneumatischen oder hydraulischen Zylinders zum Aufbringen der Spannkraft. Insbesondere für Hochtemperaturanwendungen ist der Einsatz von Luft oder N₂ (Stickstoff) zum Betätigen der Zylinder erforderlich, wobei hier die spezifischen Drücke begrenzt sind.

Dies führt dazu, dass bei größeren Foliendicken und daraus resultierenden höheren Reckkräften die durch die pneumatischen Spannzylinder aufgebrachte Spannkraft nicht ausreicht und die Folien aus der Kluppe herausrutschen können.

Ein weiterer wichtiger Parameter ist die Erwärmung der eingespannten Folie auf eine sehr genaue Recktemperatur. Für diese Aufgabe ist die Anbindung der senkrecht angeordneten oberen Kluppen mit den eingebauten Spannzylindern problematisch; Denn es entsteht um die Nettofläche der eingespannten Folie von z. B. 80 x 80 mm eine senkrechte Wand der aufstehenden Kluppen in einer Höhe von 60 - 80 mm Höhe. In diesen engen Schacht hinein muss eine Aufheizung durch das Medium Heißluft oder z. B. durch IR-Strahlung erfolgen. Die gleichmäßige Erwärmung der Folie im Randbereich sowie der die Folie haltenden Kluppen ist nicht gewährleistet.

Die Vorrichtungen nach dem Stand der Technik haben folgende Nachteile:
- Die Spannkraft der verwendeten Kluppen ist z. T. zu gering um insbesondere bei dickeren Folien (1,5 bis z. B. 3 mm Dicke) die nötigen Haltekräfte aufbringen zu können.
- Die bisher senkrecht angeordneten Spannzylinder bilden einen engen umbauten Raum, in welchem ein homogenes Erwärmen, beispielsweise mittels Heißluft oder IR-Strahlung, der Folienfläche im Inneren des Kluppenbereiches aber auch der Folie um die Kluppen herum und der Kluppen selbst schwierig ist.

Im Stand der Technik ist auch die Druckschrift US-A-5552006 bekannt, welche eine Vorrichtung zum biaxialen Recken von Folienabschnitten betrifft.

Aufgabe der vorstehenden Erfindung ist es die bestehenden Nachteile zu überwinden.

Die Aufgabe wird erfindungsgemäß durch die Merkmale des Patentanspruchs 1 gelöst, wobei in erfindungsgemäßer Weise die obere Kluppenhälfte an einer außerhalb der zu reckenden Folie liegenden Drehachse gelenkig gelagert ist. Und zwar derart dass der untere, feststehende Kluppenteil das Gelenk trägt, während der obere Kluppenteil nach oben schwenkbar ausgeführt ist und dass der Zylinder zum Aufbringen der Spannkraft um 90 Grad gedreht horizontal angeordnet ist und so die Spannkraft auf den oberen, schwenkbaren Kluppenteil aufbringt.

Mehrere horizontal angeordnete Spannzylinder sind auf der jeweiligen Kluppe axial versetzt angeordnet , dergestalt dass auf den nebeneinander angeordneten Kluppen z. B. der erste Spannzylinder an die erste Kluppe mit kurzem Flansch, angebaut ist, der zweite Spannzylinder an die zweite Kluppe aber um die Länge des Spannzylinders axial versetzt angebaut wird, der dritte Spannzylinder an die dritte Kluppe wieder mit kurzem Flansch angebaut wird - und so fort. Hierdurch wird es ermöglicht, dass jeder Spannzylinder im Außendurchmesser deutlich größer gewählt werden kann und damit die Spannkraft der Spannzylinder wesentlich erhöht werden kann.

Dadurch ist es zum Beispiel möglich, dass jeder Spannzylinder im Außendurchmesser statt wie bisher z. B. 12,5 mm gleich der Breite der Kluppe nunmehr einen z. B. auf 19 mm vergrößerten Durchmesser aufweist, so dass gerade noch die verlängerte Kolbenstange des axial nach hinten versetzten Spannzylinders zwischen die beiden kurz angebauten Spannzylinder hindurch passt und dass durch diese versetzte Ausführung und die dadurch mögliche Vergrößerung des Durchmessers der Spannzylinder die Spannkraft um den Faktor 2,5 bis 3 erhöht werden kann.

In einer vorteilhaften Ausführungsform der Erfindung ist vorgesehen, dass der obere Kluppenteil zweiteilig ausgeführt wird, wobei in weiter vorteilhafter Weise die eigentliche Kluppe getrennt und höhenverstellbar an dem schwenkbaren Basishebel angebracht ist, um die Kluppenfläche optimal in der Einspannposition an unterschiedlich Foliendicken anpassen zu können.

Eine weitere vorteilhafte Ausgestaltung der Erfindung sieht vor, dass die oberen und unteren Kluppenteile an ihrem die Folien fassenden Teil mit geringerer Breite ausgeführt sind als der Grundkörper der Kluppe, womit neben den Bereichen, in welchen die Folie zwischen den Kluppenteilen gefasst wird, noch ein Freiraum bis zur nächsten Kluppe entsteht, welcher erlaubt auch die Folienränder sowie auch die Kluppenspitzen durch dass Heizmedium - sei es Heißluft oder IR-Strahlungshitze oder dergleichen - genau so intensiv zu beheizen wie den Innenbereich der Folie.

Eine weitere vorteilhafte Ausgestaltung der Erfindung sieht vor, dass der schwenkbare Kluppenteil sowie der Gegenkluppenteil eine Mindestlänge aufweisen, um einen Freiraum um das eigentliche Folienmuster zu schaffen, welcher erlaubt die Folienränder sowie die Kluppen selbst durch das Heizmedium genauso intensiv zu beheizen wie den Innenbereich der Folie, wodurch eine gleichmäßige Beheizung auch des Folienrandes sowie der Kluppen im Spannbereich ermöglicht ist.

Eine weitere vorteilhafte Ausführungsform der Erfindung sieht vor, dass die Spannzylinder wahlweise mit gasförmigen oder flüssigen Medien beaufschlagt werden oder dass auch elektrische Antriebe für die Verstellung und Kraftaufbringung zum Einsatz kommen.

Eine derartige, nach den Maßnahmen der Erfindung, aufgebaute Vorrichtung weist folgende Vorteile auf:
- die zur Verfügung stehend Spannkraft zum Einspannen der Folie wird um den Faktor 2,5 bis 3 verstärkt (bei gleichem Druck des Mediums wie z. B. Luft oder Stickstoff mit 40 bar Druck), wodurch nun sehr viel höhere Reckkräfte aufgebracht werden können, um stärkere Folien von ca. 2 bis 3 mm ebenfalls sicher recken zu können.
- und ein in Umfangsrichtung um die zu reckende Folie deutlich größer werdender Freiraum, durch die in Folienrichtung verlängerten Kluppen, ermöglicht eine bessere und genauere Beheizung der Folie im mittleren Bereich, aber besonders auch bis zum Rand und auch der Kluppen.
- die in der Breite verringerten Kluppen erlauben eine optimale Anpassung des Verhältnisses der Kluppenbreite zur freien Folie zwischen den Kluppen, um ein gleichmäßiges Aufheizen aber auch ein einrissfreies Recken der Randbereiche zu ermöglichen.

Die Vorteile und Merkmale der Erfindung ergeben sich auch aus der nachfolgenden Beschreibung eines Ausführungsbeispieles in Verbindung mit den Zeichnungen und den Ansprüchen. Es zeigen:

### Fig.1

*Eine Draufsicht auf einen Reckrahmen zum mono- oder biaxialen Recken von Folienabschnitten nach dem Stand der Technik;*

### Fig. 2

*Eine Schnittdarstellung durch die Reckgruppe nach* *Fig. 1**;*

### Fig. 3

*Eine Schnittdarstellung durch eine Spannkluppe nach der vorstehenden Erfindung;*

### Fig. 4

*Eine Draufsicht auf den Reckrahmen nach der vorstehenden Erfindung in der Einspannposition mit ungereckter Folie mit Spannzylindern, die in zwei Reihen axial zueinander versetzt sind; und*

### Fig. 5

*Eine Seitenansicht der Spannzylinder für die Spannkluppen.*

In **Fig. 1** ist eine Draufsicht auf einen Reckrahmen zum mono- oder biaxialen Recken von Folienabschnitten nach dem Stand der Technik gezeigt. Der Abschnitt links unten zeigt die Ausgangssituation in welcher ein ungereckter, quadratischer Folienabschnitt 1 durch fünf Kluppen an jeder Seite gefasst und an den Kanten eingespannt wird. Die Kluppen 2 werden jeweils in Führungsschienen 3 bzw. 4 geführt.

Das Pantograph-System 6 synchronisiert die Bewegung der einzelnen Kluppen, um einen gleichmäßigen Reckvorgang an allen vier Seiten der Folie zu gewährleisten. Die Seite rechts und oben zeigt den Reckrahmen in auseinander gefahrenem Zustand nach dem Recken mit der gereckten Folie 7. Ein entsprechender Reckrahmen kann auch zur Umsetzung der erfindungsgemäßen Vorrichtung eingesetzt werden.

Der Antrieb für den Reckvorgang wird bewirkt durch einen (oder zwei getrennte, synchron laufende) Getriebemotor oder Hydraulikzylinder, welcher die rechte Führungsschiene nach rechts verfährt, ebenso wird die obere Schiene 4 nach oben verfahren.

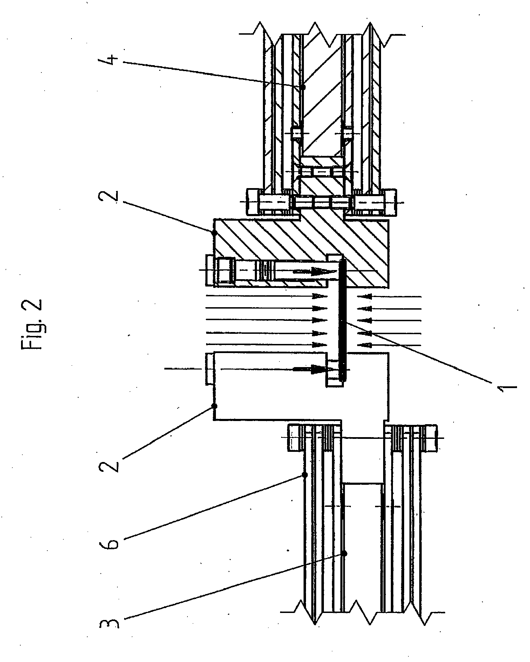

**Fig. 2** zeigt eine Schnittdarstellung durch die Reckgruppe nach Fig. 1. Die Primärfolie 1 wird durch die Kluppen 2 mit eingebautem Spannzylinder eingespannt. Die Kluppen 2 werden in der Führungsschiene 3 geführt und die Bewegung der einzelnen Kluppen durch das Pantograph-System 6 synchronisiert.

Die Erwärmung der Folie erfolgt durch Heißluft von oben und unten oder z. B. durch IR-Strahlung.

Die Einbausituation zeigt, dass die gleichmäßige Erwärmung der eingespannten Folie schon im mittleren freien Bereich schwierig ist, im Bereich in den Kluppen aber sehr schwierig.

Die einzuspannende Folie wird unten in einem Schlitz in der Kluppenhalterung eingeschoben. Damit ist der Randbereich von oben und unten komplett abgedeckt.

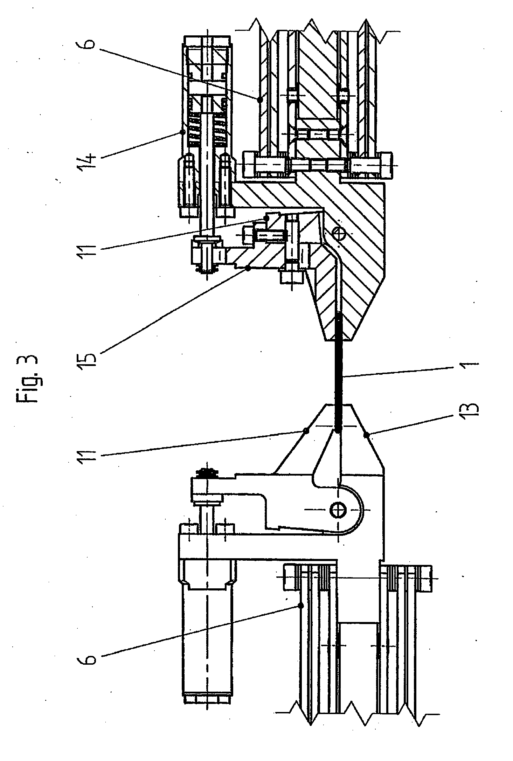

**Fig. 3** zeigt einen Schnitt durch zwei Spannkluppen nach der vorstehenden Erfindung.

Der obere Kluppenteil 11 ist hierbei an einer außerhalb der zu reckenden Folie, aber etwa in der Ebene der Folie liegenden Drehachse 12 gelenkig gelagert, wobei das untere feststehende Kluppenteil 13 das Gelenk trägt. Der Zylinder 14 zum Aufbringen der Spannkraft ist an einem senkrechten Steg des unteren feststehenden Kluppenteils befestigt, um 90 Grad gedreht, horizontal angeordnet und bringt so die Spannkraft auf das obere schwenkbare Kluppenteil auf.

Es ist gut zu erkennen, dass die Kluppenteile sowie die eingespannte Rohfolie mit z. B. 110 mm Breite frei der Warmluft bzw. der IR-Strahlung ausgesetzt sind, um eine optimale Erwärmung zu ermöglichen.

Die Zeichnung zeigt eine Aufteilung des schwenkbaren oberen Kluppenteiles 11, dergestalt dass der vordere Kluppenteil 15 getrennt und höhenverstellbar an dem Basishebel angebracht ist, um die Kluppenfläche optimal an unterschiedliche Foliendicken anpassen zu können.

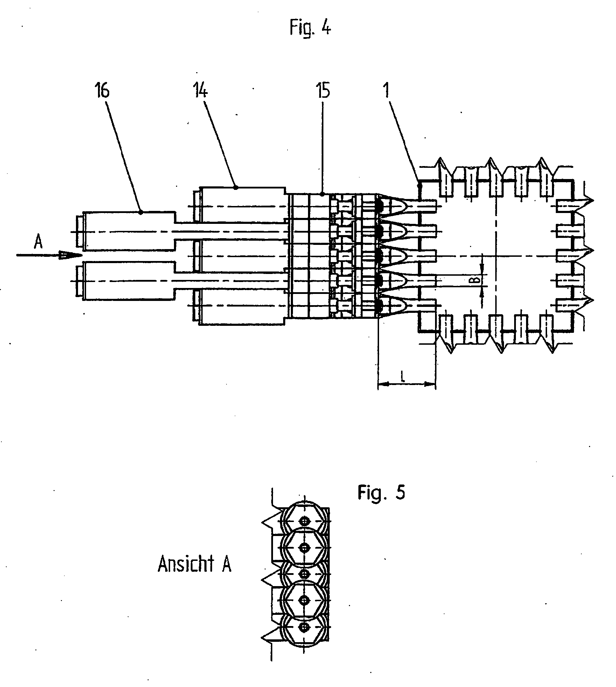

**Fig. 4** zeigt eine Draufsicht auf eine Reckgruppe nach der vorgenannten Erfindung in der Einspannposition der ungereckten Folie mit Spannzylindern welche in zwei Reihen axial versetzt sind.

Bei mehreren parallel angeordneten Kluppen (z. B. 5 Stück im dargestellten Beispiel) könnten bei direkt parallel angeordneten Spannzylindern diese nur max. die gleiche Breite haben wie die Kluppen selbst, z. B. 12,5 mm.

Die vorliegende Erfindung ist dadurch gekennzeichnet, dass die mehreren horizontal nebeneinander angeordneten Spannzylinder auf der jeweiligen Kluppe axial versetzt angeordnet sind, dergestalt dass z. B. auf den ungeraden Kluppen in Reihen 1, 3 und 5 jeweils Spannzylinder 14 mit kurzem Flansch befestigt sind, auf den dazwischen liegenden Kluppen 2 und 4 aber der Spannzylinder 16 mit langem Flansch, jeweils um die Länge eines Spannzylinders, axial versetzt angebaut werden. Hierdurch wird es möglich, dass jeder Spannzylinder im Außendurchmesser deutlich größer gewählt werden und damit die Spannkraft der Spannzylinder wesentlich erhöht werden kann. Ferner wird es möglich, dass der jeweilige Spannzylinder im Außendurchmesser statt wie bisher z. B. 12 mm (gleich der Breite der Kluppe) nunmehr einen Durchmesser von z. B. 19 mm aufweißt, so dass gerade noch die verlängerte Kolbenstange des axial nach hinten versetzten Spannzylinders zwischen den beiden kurz angebauten Spannzylindern hindurch passt.

Durch diese versetzte Ausführung und die dadurch mögliche Vergrößerung des Durchmessers der Spannzylinder kann die Spannkraft um den Faktor 2,5 bis 3 erhöht werden.

Fig. 4 zeigt auch, dass der bewegliche Kluppenteil 15 sowie der darunterliegende feste Kluppenteil 13 an dem die Folie fassenden Teil schlanker ausgeführt sind als die Gesamtbreite der Kluppe, womit neben dem Bereich in welchem die Folie zwischen den Kluppen gefasst wird noch ein Freiraum bis zur nächsten Kluppe entsteht, welcher erlaubt die Folie im Randbereich genauso intensiv zu beheizen wie im Innenbereich.

Die Ansicht "A" in der Fig. 4 zeigt den Blick auf die Spannzylinder von der Seite der Einspeisung der z. B. Druckluft.

## Patentansprüche

1. Vorrichtung zum mono- oder biaxialen Recken von Folienabschnitten mittels eines Reckrahmens, für Folien (7), welche vorzugsweise im wesentlichen aus Polymeren bestehen, wobei ein quadratischer oder rechteckiger Ausschnitt einer solchen Folie (1) an vier Seiten durch jeweils mindestens zwei Kluppen (15) gefasst wird, wobei der obere Kluppenteil (11) an einer außerhalb der zu reckenden Folie liegenden Drehachse gelenkig gelagert ist und zwar derart dass der untere, feststehende Kluppenteil (13) das Gelenk trägt, während der obere Kluppenteil (11) nach oben schwenkbar ausgeführt ist und Spannzylinder (14, 16) zum Aufbringen der Spannkraft horizontal, an einem senkrechten Steg des unteren feststehenden Kupplungsteils (11) um 90 Grad gedreht angeordnet sind und so die Spannkraft auf den oberen, schwenkbaren Kluppenteil (11) aufbringen und dass die mehreren horizontal nebeneinander angeordneten Spannzylinder (14, 16) auf der jeweiligen Kluppe axial versetzt angeordnet sind, beispielsweise dergestalt dass z. B. der erste Spannzylinder (14) an die erste Kluppe mit einem kurzem Flansch angebaut ist, der zweite Spannzylinder (16) an die zweite Kluppe um die Länge des ersten Spannzylinders (14) axial versetzt angebaut wird, der dritte Spannzylinder an die dritte Kluppe mit einem kurzen Flansch angebaut, und so fort.

2. Vorrichtung nach Anspruch 1, **dadurch gekennzeichnet:**
**dass** der obere Kluppenteil (11) zweiteilig ausgeführt ist, wobei die eigentliche Kluppe (15) getrennt höhenverstellbar an einem schwenkbaren Basishebel (11) angebracht ist, wodurch die Spannfläche der Kluppe (15) in der Höhe verstellbar und an unterschiedliche Foliendicken anpassbar ist.

3. Vorrichtung nach Anspruch 1 oder 2, **dadurch gekennzeichnet:**
**dass** die oberen und unteren Kluppenteile (11, 13) an ihrem die Folie (7) fassenden Teil mit geringerer Breite ausgeführt sind als der Gesamtkörper der Kluppe, womit neben den Bereichen der Kluppe (15), in welchen die Folie (7) zwischen den Kluppenteilen (11, 13) gefasst wird, noch ein Freiraum bis zur nächsten Kluppe entsteht.

4. Vorrichtung nach einem der Ansprüche 1 bis 3, **dadurch gekennzeichnet:**
**dass** der mit geringerer Breite ausgeführte Teil der Kluppen (15) deutlich länger ist als die Breite der zu reckenden Folie (7), sodass die Außenkante der Folie (7) beheizbar ist.

## Claims

1. A device for the mono-axial or bi-axial stretching of film sections by means of a stretch frame for films (7), which preferably substantially consist of polymers, wherein a square or rectangular section of such a film (1) is gripped on four sides by respectively at least two clips (15), wherein the upper clip portion (11) is hingedly mounted on a rotary axis outside the film to be stretched, such that the lower stationary clip portion (13) supports the joint, whilst the upper clip portion (11) is constructed to be upwardly pivotable, and clamping cylinders (14, 16) for applying the clamping force are horizontally arranged on a vertical web of the lower stationary clip portion (11), rotated by 90 degrees, thereby applying the clamping force to the upper, pivotable clip portion (11), and that the plurality of horizontally adjacently arranged clamping cylinders (14, 16) are arranged axially offset on the respective clip, for exemple in such a way that e.g. the first clamping cylinder (14) is attached to the first clip with a short flange, the second clamping cylinder (16) is attached to the second clip axially offset by the length of the first clamping cylinder (14), the third clamping cylinder is attached to the third clip with a short flange, and so forth.

2. The device according to claim 1, **characterised in that**
the upper clip portion (11) is constructed in two parts, wherein the clip (15) as such is separately height-adjustable, attached to a pivotable base lever (11), whereby the clamping surface of the clip (15) is adjustable in height and adaptable to different film thicknesses.

3. The device according to claim 1 or 2, **characterised in that**
the upper and lower clip portions (11, 13) are constructed, in the portion gripping the film (7), with a lesser width than the overall body of the clip, thereby leaving a free space next to the area of the clip (15), in which the film (7) is gripped between the clip portions (11, 13), in relation to the next clip.

4. The device according to one of claims 1 to 3, **characterised in that**
the portion of the clips (15) constructed with a lesser width is distinctly longer than the width of the film (7) to be stretched, so that the outer edge of the film (7) is heatable.

## Revendications

1. Dispositif d'étirage monoaxial ou biaxial de sections de films au moyen d'un cadre d'étirage, pour des films (7), constitués de préférence sensiblement de polymères, un coupon quadratique ou rectangulaire d'un tel film (1) étant saisi sur quatre côtés par chaque fois deux pinces (15), la partie supérieure (11) de la pince étant logée de manière articulée sur un axe de rotation situé à l'extérieur du film à étirer, à savoir de telle sorte que la partie inférieure (13) fixe de la pince porte l'articulation, alors que la partie supérieure (11) de la pince est réalisée en étant pivotante vers le haut et des cylindres de tension (14, 16) pour l'application de l'effort de tension étant disposés à l'horizontale, en rotation à 90 degrés sur un listel vertical de la partie inférieure (11) fixe de la pince et appliquant ainsi l'effort de tension sur la partie supérieure (11) pivotante de la pince et les plusieurs cylindres de tension (14, 16) disposés côte à côte à l'horizontale étant disposés sur la pince concernée en étant déportés en direction axiale, par exemple de la sorte que par exemple le premier cylindre de tension (14) est monté sur la première pince à l'aide d'une bride courte, qu'on monte le deuxième cylindre de tension (16) sur la deuxième pince en étant déporté en direction axiale de la valeur de la longueur du premier cylindre de tension (14), le troisième cylindre de tension est monté sur la troisième pince à l'aide d'une bride courte et ainsi de suite.

2. Dispositif selon la revendication 1, **caractérisé en ce que**
la partie supérieure de la pince (11) est réalisée en deux éléments, la pince (15) proprement dite étant placée en étant réglable séparément en hauteur sur un levier de base (11) pivotant, ce qui permet de régler en hauteur la surface de tension de la pince (15) et de l'adapter à différentes épaisseurs de film.

3. Dispositif selon la revendication 1 ou la revendication 2, **caractérisé en ce que**
sur leur partie saisissant le film (7), les parties supérieure et inférieure (11, 13) sont réalisées avec une largeur inférieure à celle de l'ensemble du corps de la pince, ce à côté des zones de la pince (15) dans lesquelles le film (7) est saisi entre les parties de pince (11, 13), donne naissance à encore un espace libre jusqu'à la pince suivante.

4. Dispositif selon l'une quelconque des revendications 1 à 3, **caractérisé en ce que**
la partie de la pince (15) réalisée avec la plus faible largeur est nettement plus longue que la largeur du film (7) à étirer, de sorte que l'arête extérieure du film (7) puisse être chauffée.
